# EUROPEAN PATENT APPLICATION

(11) **EP 4 383 929 A1**
(43) Date of publication of application: **12.06.2024**
(21) Application number: 22852231.4
(22) Date of filing: 03.08.2022
(51) Int. Cl.: H04W 76/20

(54) **REMOTE USER EQUIPMENT PROCESSING METHOD, AND USER EQUIPMENT**

(30) Priority: 04.08.2021 CN 202110894141
(71) Applicant: Sharp Kabushiki Kaisha, Sakai-shi Osaka 590-8522 (JP)
(72) Inventor: ZHANG, Chongming, Shanghai 201206 (CN); LIU, Renmao, Shanghai 201206 (CN)
(74) Representative: Müller-Boré & Partner Patentanwälte PartG mbB
(86) International application number: PCT/CN2022/109935
(87) International publication number: WO 2023/011519

(57) **Abstract**

Provided in the present invention are a processing method for remote user equipment, and user equipment. The processing method is performed by remote user equipment (UE) in a process of communicating with a base station via relay UE, and includes the following steps: receiving, by the remote UE, a message transmitted by the relay UE and including cell ID information, wherein the relay UE provides a relay service for the remote UE; and upon receiving the message, determining, by the remote UE, whether a cell ID therein has changed or is different from a previously received cell ID.

## Description

### TECHNICAL FIELD

The present invention relates to the technical field of wireless communications. More specifically, the present invention relates to a processing method for remote UE, and a corresponding base station and corresponding user equipment.

### BACKGROUND

In a cell covered by a base station, user equipment (UE) can directly communicate with the base station, and such a communication connection is called a direct connection. The UE may also be in communication connection with the base station via relay UE, and such a connection may be called an indirect connection. In a scenario in which the UE communicates with the base station by means of the relay UE, the UE is called remote UE.

The relay UE provides, to the remote UE via broadcast, information of the base station such as a cell identity (ID) of a cell that the relay UE currently camps on or is currently connected to, a PLMN identity, etc. When the remote UE selects relay UE for providing a relay service therefor, the remote UE needs to consider the foregoing information.

When the remote UE selects relay UE as a serving relay thereof via a relay selection/reselection procedure, a cell that the relay UE camps on or is connected to becomes the actual serving cell of the remote UE, or may be referred to as a camped cell of the remote UE. Certainly, such "camping" is logical camping.

Due to the mobility of the relay UE, the cell that the relay UE camps on or is connected to may change. For example, if the relay UE changes from selecting a cell 1 to selecting a cell 2 via a cell selection or reselection procedure, the cell identity provided by the relay UE to the remote UE changes. As another example, the relay UE is in a connected state, and is handed over to a new cell upon receiving a handover command transmitted by a network side. Likewise, in this case, the cell identity provided by the relay UE to the remote UE also changes.

How remote UE should perform processing to avoid inconsistent network states when a serving cell ID received by the remote UE from relay UE that serves the remote UE changes is a problem that needs to be solved.

### SUMMARY

In order to solve the above problem, provided in the present invention are a processing method for remote user equipment, and user equipment, which can avoid inconsistent network states when a serving cell ID received by remote UE from relay UE that serves the remote UE changes.

According to an aspect of the present invention, provided is a processing method for remote user equipment, being a processing method performed by remote user equipment (UE) in a process of communicating with a base station via relay UE, comprising the following steps:
receiving, by the remote UE, a message transmitted by the relay UE and comprising cell ID information, wherein the relay UE provides a relay service for the remote UE; and
upon receiving the message, determining, by the remote UE, whether a cell ID therein has changed or is different from a previously received cell ID.

In the foregoing processing method for remote user equipment, preferably, the processing method further comprises the following step:
when the remote UE determines that the received cell ID has changed or determines that the received cell ID is different from the previously received cell ID, determining, by the remote UE, that cell selection or cell reselection has occurred, and performing at least one of the following operations:
when a timer T302 is running, performing an operation upon going to an RRC idle state, and setting a release cause value to be RRC connection failure;
when a timer T390 is running, stopping T390 for all access categories, and indicating, to an upper layer, that access barring is alleviated; or
applying a system information acquisition procedure to acquire system information.

In the foregoing processing method for remote user equipment, preferably, the processing method further comprises the following step:
when the remote UE determines that the received cell ID has not changed, skipping, by the remote UE, the foregoing operation.

In the foregoing processing method for remote user equipment, preferably, the processing method further comprises the following step:
when the remote UE determines that the received cell ID has changed or determines that the received cell ID is different from the previously received cell ID, performing, by the remote UE, at least one of the following operations:
when a timer T302 is running, performing an operation upon going to an RRC idle state, and setting a release cause value to be RRC connection failure;
when a timer T390 is running, stopping T390 for all access categories, and indicating, to an upper layer, that access barring is alleviated; or
applying a system information acquisition procedure to acquire system information.

In the foregoing processing method for remote user equipment, preferably, the processing method further comprises the following step:
when the remote UE determines that the received cell ID has changed or determines that the received cell ID is different from the previously received cell ID, triggering or performing, by the remote UE, a relay selection or relay reselection operation.

In the foregoing processing method for remote user equipment, preferably,
the relay UE transmits the message comprising the cell ID information to the remote UE in any one of the following manners:
transmitting, by the relay UE, a discovery message, the message carrying the cell ID, so that the remote UE can acquire the cell ID upon receiving the discovery message transmitted by the relay UE;
transmitting, by the relay UE, a PC5 message via broadcast, the message carrying the cell ID, so that the remote UE can acquire the cell ID upon receiving the PC5 message transmitted by the relay UE; or
transmitting, by the relay UE, a PC5 RRC message via unicast, the message carrying the cell ID, so that the remote UE can acquire the cell ID upon receiving the PC5 message transmitted by the relay UE.

In the foregoing processing method for remote user equipment, preferably, the processing method further comprises the following steps:
receiving, by the remote UE, information transmitted by the relay UE and indicating that the system information has changed, the information comprising information indicating that a serving cell of the relay UE has changed; and
acquiring, by the remote UE, the cell ID on the basis of the indication information in any one of the foregoing manners.

In the foregoing processing method for remote user equipment, preferably,
when the relay UE undergoes cell selection or cell reselection, or receives a handover command from the base station, or is instructed to perform synchronization in a new cell, the relay UE updates the cell ID information provided to the remote UE, comprising updating the cell ID carried in the discovery message or the PC5 message.

In the foregoing processing method for remote user equipment, preferably,
when the relay UE undergoes cell selection or cell reselection, or receives a handover command from the base station, or is instructed to perform synchronization in a new cell, the relay UE transmits information indicating that the system information has changed, the information comprising information indicating that a serving cell of the relay UE has changed.

According to another aspect of the present invention, provided is user equipment, comprising:
a processor; and
a memory storing instructions, wherein
the instructions, when run by the processor, cause the user equipment to perform the method described above.

The processing method for remote UE and the corresponding user equipment according to the present disclosure can reliably avoid inconsistent network states when a serving cell ID received by remote UE from relay UE that serves the remote UE changes.

### BRIEF DESCRIPTION OF THE DRAWINGS

FIG. 1 is a schematic diagram showing UE-to-network relay.
FIG. 2 is a schematic diagram showing a UE-to-network relay architecture interface.
FIG. 3 is a flowchart showing a processing method for remote UE according to an embodiment of the present invention.
FIG. 4 is a simplified structural block diagram of user equipment according to the present invention.

### DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment
NR: New Radio
LTE: Long Term Evolution
eLTE: enhanced Long Term Evolution
RRC: Radio Resource Control (layer)
MAC: Medium Access Control (layer)
MAC CE: MAC Control Element
RRC: Radio Resource Control
RRC_CONNECTED: RRC connected state
RRC INACTIVE: RRC inactive state
RRC IDLE: RRC idle state
RAN: Radio Access Network
Sidelink: Sidelink communication
SL: Sidelink
ProSe: Proximity-based services
PCI: Physical Cell Identifier
CGI: Cell Global Identifier
NCI: NR Cell Identity
NG-RAN: NG Radio Access Network
PLMN: Public Land Mobile Network

A plurality of embodiments according to the present invention are specifically described below, with an NR mobile communications system and its subsequent evolved version serving as exemplary application environments, and with a base station and UE that support NR serving as examples. However, it should be noted that the present invention is not limited to the following embodiments, but is applicable to more other wireless communications systems, such as an eLTE communication system, or an NB-IoT system, or an LTE-M system. Moreover, the present invention may be applicable to other base stations and user equipment, such as base stations and user equipment supporting eLTE/NB-IoT/LTE-M.

In NR access technology, UE and a base station are connected by means of a Uu interface. According to the connection status of the UE over the Uu interface, the states of the UE can be divided into an RRC idle state (IDLE), an RRC connected state, and an RRC inactive state (INACTIVE). In the RRC inactive state, although the UE has no connection over the air interface, an access stratum context (AS context) of the UE is reserved on the base station side and the UE side, and the UE is assigned an I-RNTI, which is used by the UE to resume an RRC connection. This intermediate state can be considered as a connection suspended state, or it can be considered as a connection inactive state.

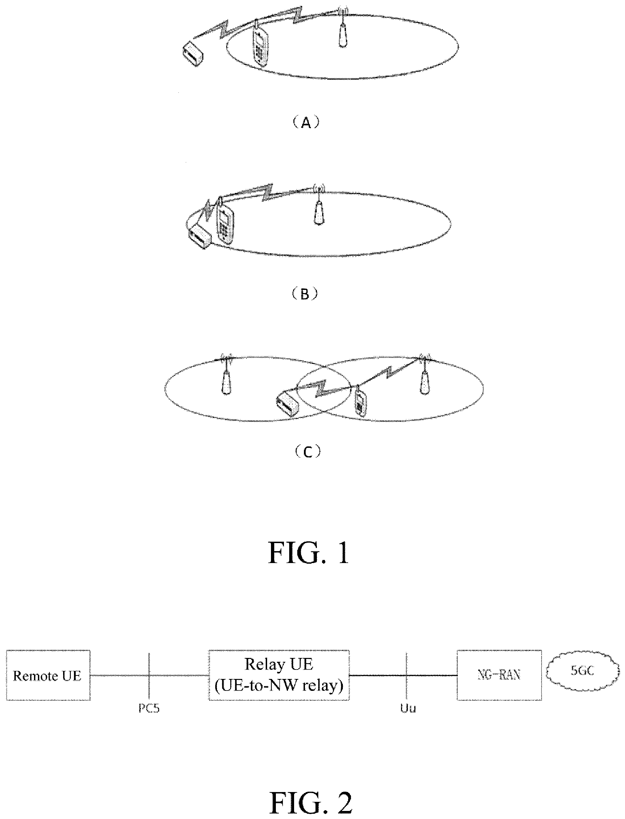

UE-to-network relay is as shown in FIG. 1. In scenario 1(A) and scenario 2(B), the left side is remote UE, the middle is relay UE, and the right side is a network (also referred to as a base station, a network, or an NW in the present specification). In scenario 3(C), the two sides are networks, and the middle, from left to right, is remote UE and relay UE, respectively. The remote UE and the relay UE are connected to each other by means of a PC5 interface, and the relay UE is connected to the network by means of a Uu interface. Because the remote UE is far from the network or because the communication environment is poor, the relay UE is needed to relay and forward signaling and data between the remote UE and the network.

A UE-to-network relay architecture interface is as shown in FIG. 2, in which the remote UE and the relay UE are connected by means of a PC5 (ProSe protocol 5) interface. A PC5 interface is an interface for performing control plane and user plane sidelink communication between UE and UE. For sidelink unicast, a PC5-RRC connection is an access stratum (AS) logical connection between a pair of a source layer-2 ID and a target layer-2 ID. Setup of one PC5 unicast link corresponds to setup of one PC5-RRC connection. A PC5-RRC message refers to a message transmitted on the PC5-RRC connection, which is mainly generated and processed by a PC5 RRC layer of the UE. A PC5-S connection is a non-access stratum (NAS) logical connection between a pair of a source layer-2 ID and a target layer-2 ID, or may be considered as a logical connection at a sidelink communication higher layer. A PC5-S message (also referred to as PC5-S signaling) refers to a message or signaling transmitted on the PC5 non-access stratum, and is mainly generated or processed by a non-access stratum of the PC5 interface.

Hereinafter, a description will be given of related art of the present invention.

An NCGI is used to identify an NR cell globally. The NCGI is composed of a PLMN ID and an NCI. The NCI is indicated by a Cell Identity information element in a system message.

The cell ID information mentioned below may be an NCGI, or a PCI, or a CGI, or an NCI, or may be other identification information capable of being used to uniquely determine a cell.

In NR, when UE finds that an access category thereof is barred according to system information broadcast by a network, the UE calculates the time of access barring according to information in the system information, starts a T390 timer, and does not initiate access to the network again during the running of the timer. After the UE transmits an RRCSetupRequest message, the UE starts a T300 timer. When the UE receives an RRCReject message when initiating RRC connection establishment or resume, the UE starts a T302 timer according to a waitTime information element in the message. When the UE initiates an RRC connection re-establishment procedure, the UE starts a T311 timer. When the UE transmits an RRCResumeRequest or RRCResumeRequest1 message, the UE starts a T319 timer.

After the remote UE selects one piece of relay UE to provide a relay service for the remote UE, the remote UE will establish a PC5-RRC connection to the relay UE, so as to communicate with the network by means of the relay UE. For a sidelink layer two-relay architecture, the remote UE can establish an air interface RRC connection to the network by means of the relay UE for data transmission between the remote UE and the network. The remote UE encapsulates messages such as RRC connection establishment, re-establishment, and resume to the network in a PC5 message and transmits the PC5 message to the relay UE, and the relay UE forwards the PC5 message to the network after receiving the PC5 message. Conversely, an RRC message replied by the network is encapsulated in a PC5 message by the relay UE and forwarded to the remote UE. When the remote UE initiates a procedure such as RRC connection establishment, re-establishment, or resume to the network, the remote UE can perform an access control check.

Herein, "determining whether a cell ID has changed" and "determining whether a cell has changed" are interchangeable, and the former is an implementation of the latter. That is, the UE may determine, according to a change in the cell ID, whether the cell has changed. Once the cell ID has changed, it is indicated that the cell has changed. If the cell ID has not changed, it is indicated that the cell has not changed.

### Embodiment 1

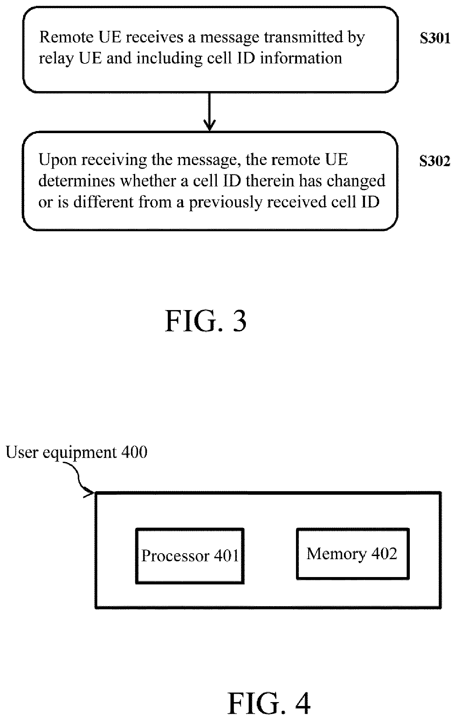

The present embodiment provides a processing method for remote UE. As shown in FIG. 3, the method includes the following steps.

In step 1, remote UE receives a message transmitted by relay UE and including cell ID information (step S301 in FIG. 3).

The relay UE provides a relay service for the remote UE. Specifically, the remote UE can be in communication connection with a base station via the relay UE. In other words, the relay UE is a relay selected by the remote UE via a relay selection/reselection procedure. In addition, the remote UE and the relay UE have successfully established a PC5 link. Such a relay UE may be referred to as a serving relay.

A cell ID included in the message preferably refers to a cell ID of a cell that the relay UE camps on, or a cell ID corresponding to establishment of an RRC connection performed by the relay UE. Such a cell may be referred to as a serving cell of the relay UE, and such a cell ID may be referred to as a serving cell ID of the relay UE.

Correspondingly, since the relay UE provides the relay service for the remote UE via the cell, such a cell may also be referred to as a serving cell of the remote UE or a camped cell of the remote UE.

In step 2, upon receiving the message, the remote UE determines whether a cell ID therein has changed or is different from a previously received cell ID (step S302 in FIG. 3). Specifically:
The remote UE receives, from first relay UE, a message including first cell ID information. The remote UE may maintain and record the first cell ID.

Next, the remote UE receives, from the first relay UE, a message including second cell ID information.

Preferably, the message including the first cell ID information and the message including the second cell ID information are of the same type. In general, the relay UE includes the cell ID (the first cell ID) of the serving cell thereof in such a message, and transmits the same to the remote UE. When the relay UE undergoes cell selection or reselection, or receives a handover command from the base station, or receives a command and is instructed to perform synchronization with a new cell, the cell ID of the serving cell thereof has changed, so that the relay UE transmits, to the remote UE, the message including the second cell ID information.

The remote UE may determine, by comparing the first cell ID and the second cell ID, that the first cell ID and the second cell ID are different cell IDs, thereby determining that the cell ID has changed or determining that the received cell ID is different from the previously received cell ID.

Additionally, the remote UE may determine, by comparing the first cell ID and the second cell ID, that the first cell ID and the second cell ID are the same, thereby determining that the cell ID has not changed or determining that the cell ID is the same as the previously received cell ID.

In step 3, when the remote UE determines that the cell ID has changed or determines that the received cell ID is different from the previously received cell ID, the remote UE considers that cell selection or cell reselection has occurred.

In the case that it is considered, on the basis of the foregoing, that the cell selection or reselection has occurred, the remote UE performs one or a plurality of the following operations:
- when a timer T302 is running, performing an operation upon going to an RRC idle state, and setting a release cause value to be "RRC connection failure" (perform the actions upon going to RRC_IDLE with release cause 'RRC connection failure');
- when a timer T390 is running, stopping T390 for all access categories, and indicating, to an upper layer, that access barring is alleviated, wherein the upper layer here mainly refers to a non-access stratum (NAS) above the RRC layer; or
- applying a system information acquisition procedure to acquire system information.

In step 4, as a supplement to step 3, when the remote UE determines that the cell ID has not changed, the remote UE skips the foregoing operation.

The cell ID information provided by the serving relay may be denoted as ID information of the serving cell serving the remote UE or ID information of the camped cell of the remote UE.

Therefore, another embodiment of the foregoing solution may be as follows:
Remote UE receives a message transmitted by relay UE and including cell ID information. The relay UE provides a relay service for the remote UE. Optionally, the remote UE may denote a corresponding cell in the message as a serving cell/camped cell of the remote UE.

The remote UE determines whether the serving cell or camped cell thereof has changed, and preferably, may determine whether the cell ID information of the serving cell or camped cell thereof has changed. Such determination is performed on the basis of comparison performed by the remote UE with the information of the serving cell/camped cell acquired thereby previously.
- If the serving cell/camped cell of the remote UE has changed, the remote UE considers that cell selection or cell reselection has occurred, and performs the foregoing related operation performed in the case that the remote UE considers that the cell selection or reselection has occurred.
- If the serving cell/camped cell of the remote UE has not changed, the remote UE skips the foregoing operation.

### Embodiment 2

The difference between Embodiment 2 and Embodiment 1 lies in step 3.

In step 3, when the remote UE determines that the cell ID has changed or determines that the received cell ID is different from the previously received cell ID, the remote UE performs one or a plurality of the following operations:
when a timer T302 is running, performing an operation upon going to an RRC idle state, and setting a release cause value to be "RRC connection failure" (perform the actions upon going to RRC_IDLE with release cause 'RRC connection failure');
when a timer T390 is running, stopping T390 for all access categories, and indicating, to an upper layer, that access barring is alleviated; or
applying a system information acquisition procedure to acquire system information.

### Embodiment 3

The difference between Embodiment 3 and Embodiment 1 lies in step 3.

In step 3, when the remote UE determines that the cell ID has changed or determines that the received cell ID is different from the previously received cell ID, the remote UE triggers or performs a relay selection or relay reselection operation.

### Embodiment 4

In the foregoing embodiment, the relay UE may transmit the message including the cell ID information to the remote UE in the following manner.

For example, the relay UE transmits a discovery message, and the message carries the cell ID. In turn, the remote UE can acquire the cell ID upon receiving the discovery message transmitted by the relay UE.

As another example, the relay UE transmits a PC5 message via broadcast, and the message carries the cell ID. In turn, the remote UE can acquire the cell ID upon receiving the PC5 message transmitted by the relay UE.

As another example, the relay UE transmits a PC5 RRC message via unicast, and the message carries the cell ID. In turn, the remote UE can acquire the cell ID upon receiving the PC5 message transmitted by the relay UE.

In a case, the remote UE may first receive information transmitted by the relay UE and indicating that the system information has changed, or preferably, information indicating that a serving cell of the relay UE has changed. Then, the remote UE acquires the cell ID on the basis of the indication information in any one of the foregoing manners.

### Embodiment 5

In the foregoing embodiment, when the relay UE undergoes cell selection or cell reselection, or receives a handover command from the base station, or receives a command and is instructed to perform synchronization with a new cell, the relay UE needs to provide new cell ID information to the remote UE, that is, the cell ID information provided by the relay UE shall correspond to the cell selected or reselected thereby or the new cell with which synchronization is performed thereby. That is, the cell ID information provided to the remote UE is updated. Since the selected or reselected cell or the cell with which synchronization is performed by the relay UE serves the relay UE, such cell may also be referred to as the serving cell of the relay UE. The relay UE needs to provide ID information of the serving cell thereof.

For example, when the relay UE undergoes cell selection or cell reselection, or receives a handover command from the base station, or receives a command and is instructed to perform synchronization with a new cell, the cell ID carried in the discovery message or the PC5 message is updated. Specifically, a corresponding message may carry a cell ID of a cell selected or reselected by the relay UE, or carry a cell ID of a target cell to which the relay UE is handed over.

As another example, when the relay UE undergoes cell selection or cell reselection, or receives a handover command from the base station, or receives a command and is instructed to perform synchronization with a new cell, information indicating that the system information has changed needs to be transmitted. Preferably, the relay UE may transmit information indicating that the serving cell of the relay UE has changed. In addition, the cell ID carried in the discovery message or the PC5 message is updated.

### Embodiment 6

In a case, remote UE undergoes relay selection or relay reselection. That is, a serving relay has changed. The serving relay has changed from first relay UE to second relay UE. In the manner in the foregoing embodiment, the remote UE can acquire a cell ID, and further determine whether the cell ID therein has changed or is different from a previously received cell ID. Specifically:
The remote UE receives, from the first relay UE, a message including first cell ID information. The remote UE may maintain and record the first cell ID.

Next, the remote UE receives, from the second relay UE, a message including second cell ID information.

The first relay UE is different from the second relay UE.

The remote UE may determine, by comparing the first cell ID and the second cell ID, that the first cell ID and the second cell ID are different cell IDs, thereby determining that the cell ID has changed or determining that the received cell ID is different from the previously received cell ID.

Additionally, the remote UE may determine, by comparing the first cell ID and the second cell ID, that the first cell ID and the second cell ID are the same, thereby determining that the cell ID has not changed or determining that the cell ID is the same as the previously received cell ID.

When the remote UE determines that the cell ID has changed or determines that the received cell ID is different from the previously received cell ID, the remote UE performs one or a plurality of the following operations:
when a timer T302 is running, performing an operation upon going to an RRC idle state, and setting a release cause value to be "RRC connection failure" (perform the actions upon going to RRC_IDLE with release cause 'RRC connection failure');
when a timer T390 is running, stopping T390 for all access categories, and indicating, to an upper layer, that access barring is alleviated; or
applying a system information acquisition procedure to acquire system information.

When the remote UE determines that the cell ID has not changed or determines that the received cell ID is the same as the previously received cell ID, the remote UE skips the foregoing operation.

FIG. 4 is a simplified structural block diagram of user equipment according to the present invention.

As shown in FIG. 4, the user equipment 400 at least includes a processor 401 and a memory 402. The processor 401 may include, for example, a microprocessor, a microcontroller, an embedded processor, and the like. The memory 402 may include, for example, a volatile memory (for example, a random access memory (RAM)), a hard disk drive (HDD), a non-volatile memory (for example, a flash memory), or other memory systems. The memory 402 stores program instructions. When the instructions are run by the processor 401, one or several steps in the processing method for remote UE described above of the present disclosure can be performed.

The methods and related devices according to the present disclosure have been described above in conjunction with preferred embodiments. It should be understood by those skilled in the art that the method shown above is only exemplary, and the above embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. A person skilled in the art could make various alterations and modifications according to the teachings of the illustrated embodiments.

It should be understood that the above embodiments of the present disclosure may be implemented through software, hardware, or a combination of software and hardware. For example, various components of the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by the computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A processing method for remote user equipment, being a processing method performed by remote user equipment (UE) in a process of communicating with a base station via relay UE, comprising the following steps:
receiving, by the remote UE, a message transmitted by the relay UE and comprising cell ID information, wherein the relay UE provides a relay service for the remote UE; and
upon receiving the message, determining, by the remote UE, whether a cell ID therein has changed or is different from a previously received cell ID.

2. The processing method for remote user equipment according to claim 1, further comprising the following steps:
when the remote UE determines that the received cell ID has changed or determines that the received cell ID is different from the previously received cell ID, determining, by the remote UE, that cell selection or cell reselection has occurred, and performing at least one of the following operations:
when a timer T302 is running, performing an operation upon going to an RRC idle state, and setting a release cause value to be RRC connection failure;
when a timer T390 is running, stopping T390 for all access categories, and indicating, to an upper layer, that access barring is alleviated; and
applying a system information acquisition procedure to acquire system information.

3. The processing method for remote user equipment according to claim 2, further comprising the following step:
when the remote UE determines that the received cell ID has not changed, skipping, by the remote UE, the foregoing operation.

4. The processing method for remote user equipment according to claim 1, further comprising the following steps:
when the remote UE determines that the received cell ID has changed or determines that the received cell ID is different from the previously received cell ID, performing, by the remote UE, at least one of the following operations:
when a timer T302 is running, performing an operation upon going to an RRC idle state, and setting a release cause value to be RRC connection failure;
when a timer T390 is running, stopping T390 for all access categories, and indicating, to an upper layer, that access barring is alleviated; and
applying a system information acquisition procedure to acquire system information.

5. The processing method for remote user equipment according to claim 1, further comprising the following step:
when the remote UE determines that the received cell ID has changed or determines that the received cell ID is different from the previously received cell ID, triggering or performing, by the remote UE, a relay selection or relay reselection operation.

6. The processing method for remote user equipment according to any one of claims 1 to 5, wherein
the relay UE transmits the message comprising the cell ID information to the remote UE in any one of the following manners:
transmitting, by the relay UE, a discovery message, the message carrying the cell ID, so that the remote UE can acquire the cell ID upon receiving the discovery message transmitted by the relay UE;
transmitting, by the relay UE, a PC5 message via broadcast, the message carrying the cell ID, so that the remote UE can acquire the cell ID upon receiving the PC5 message transmitted by the relay UE; or
transmitting, by the relay UE, a PC5 RRC message via unicast, the message carrying the cell ID, so that the remote UE can acquire the cell ID upon receiving the PC5 message transmitted by the relay UE.

7. The processing method for remote user equipment according to claim 6, further comprising the following steps:
receiving, by the remote UE, information transmitted by the relay UE and indicating that the system information has changed, the information comprising information indicating that a serving cell of the relay UE has changed; and
acquiring, by the remote UE, the cell ID on the basis of the indication information in any one of the foregoing manners.

8. The processing method for remote user equipment according to claim 6, wherein
when the relay UE undergoes cell selection or cell reselection, or receives a handover command from the base station, or is instructed to perform synchronization in a new cell, the relay UE updates the cell ID information provided to the remote UE, comprising updating the cell ID carried in the discovery message or the PC5 message.

9. The processing method for remote user equipment according to claim 6, wherein
when the relay UE undergoes cell selection or cell reselection, or receives a handover command from the base station, or is instructed to perform synchronization in a new cell, the relay UE transmits information indicating that the system information has changed, the information comprising information indicating that a serving cell of the relay UE has changed.

10. User equipment, comprising:
a processor; and
a memory storing instructions,
wherein the instructions, when run by the processor, perform the processing method according to any one of claims 1 to 9.
